# EUROPÄISCHE PATENTSCHRIFT

(11) **EP 0 579 098 B1**
(45) Veröffentlichungstag und Bekanntmachung des Hinweises auf die Patenterteilung: **19.03.1997**
(21) Anmeldenummer: 93110858.3
(22) Anmeldetag: 07.07.1993
(51) Int. Cl.: F16C 17/04

(54) **Druckübertragungssystem und Verfahren zu deren Herstellung**
Thrust transmitting device and method of making the same
Dispositif de transfert de forces axiales et son procédé de fabrication

(30) Priorität: 13.07.1992 US 912370
(43) Veröffentlichungstag der Anmeldung: 19.01.1994
(73) Patentinhaber: DEERE & COMPANY, Moline, Illinois 61265 (US)
(72) Erfinder: Westervelt, Ralph, Pekin, Illinois 61554 (US); Klages, Corwin Lee, Cedar Falls, Iowa 50613 (US)
(74) Vertreter: Feldmann, Bernhard

(56) Entgegenhaltungen:
- EP-A- 0 301 130
- GB-A- 811 021
- US-A- 4 288 172
- US-A- 4 693 699

## Beschreibung

Die Erfindung betrifft ein Druckübertragungssystem zwischen sich relativ zueinander drehenden Teilen, die Verwendung einer Druckscheibe in einem derartigen Druckübertragungssystem und ein Verfahren zur Herstellung des Druckübertragungssystems.

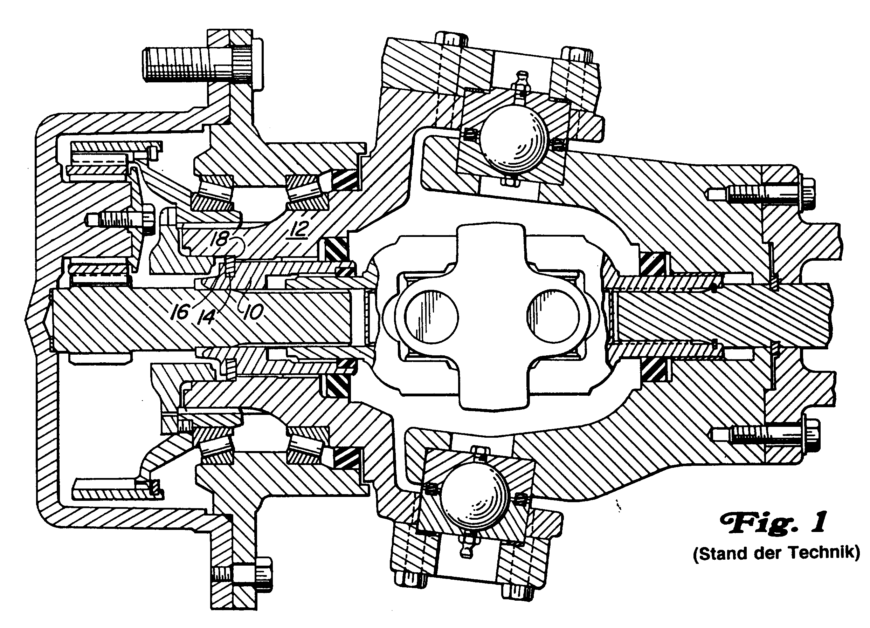

Druckscheiben und verwandte Kraftübertragungsbauteile werden in einer Vielzahl von Anwendungsgebieten zur Übertragung mechanischer Kräfte verwendet. Die Fig. 1 der Zeichnung zeigt einen bekannten Fahrzeugendantrieb eines landwirtschaftlichen Fahrzeugs, wie er beispielsweise aus der US-A-4,693,699 hervorgeht, bei dem eine derartige Druckscheibe verwendet wird. Die vorliegende Erfindung betrifft den Bereich der Druckscheibe und nicht den Fahrzeugendantrieb als ganzes. Daher wird nicht der ganze Fahrzeugendantrieb beschrieben, sondern diesbezüglich auf die US-A-4,693,699 verwiesen.

Bei der bekannten Anordnung wird Druck zwischen einem sich drehenden Teil 10 und einem nicht drehenden Teil 12 übertragen. Hierzu wird eine Druckscheibe 14 mit einem rechteckigen Querschnitt verwendet. Die Druckscheibe 14 fügt sich in eine Nut 16 ein, die in das sich drehende Teil 10 eingelassen ist, und liegt an einem Absatz 18, der an dem nicht drehenden Teil 12 ausgebildet ist, an. Die Druckscheibe 14 selbst besteht aus Segmenten, beispielsweise zwei oder drei Segmenten, so daß sie sich in die Nut 16 einfügen läßt, ohne daß sie aufgeweitet oder gebogen werden muß.

Diese Ausbildung ist zwar einfach, leidet jedoch unter Spannungsproblemen. Insbesondere treten wegen der scharfen rechtwinkligen Ecken der Druckscheibe 14 und des Absatzes 18 hohe Spannungen in den Schnittlinien auf.

Ähnlichen Verhältnissen begegnet man bei der US-A-4,288,172, die jedoch kein Druckübertragungssystem zwischen sich relativ zueinander drehenden Teilen beschreibt. Aus dieser Schrift kann geschlossen werden, daß es vorteilhaft ist, eine Druckscheibe mit im Querschnitt abgerundeten Ecken an Stelle eines rechteckigen Querschnitts zu verwenden. Diese Schrift lehrt zwei mögliche Ausbildungen mit abgerundeten Ecken: Bevorzugt wird eine Ausgestaltung der Druckscheibe aus Massivmetall, deren nach innen weisende Seite als 180°-Bogen ausgebildet ist. Die alternative Ausbildung weist einen einseitigen 90°-Bogen auf. Es wurde bemerkt, daß die Ausbildung mit dem 90°-Bogen einer höheren Beanspruchung widersteht als die Ausbildung bildung mit einem 180°-Bogen. Jedoch wird dennoch die mit dem 180°-Bogen gegenüber der mit dem 90°-Bogen bevorzugt, da die Ausbildung mit dem 90°-Bogen schwierig und kostenintensiv herstellbar sei und den ausgesprochenen Nachteil aufweise, daß die Druckscheibe versehentlich verkehrt herum in die Nut eingesetzt werden könne.

Aus Gründen der Herstellbarkeit und der Beständigkeit wäre es vorteilhaft, die Druckscheibe aus gesintertem Metallpulver herzustellen. Jedoch ist die Herstellung einer Oberfläche mit einem 180°-Bogen extrem schwierig. Anhand der Fig. 3 wird erläutert, warum dies so ist: Um eine derartige Ausbildung herzustellen, muß die Sinterform 20 eine Nut mit abgerundeten Seiten 22 enthalten. Entsprechend muß auch der Stempel 24, durch den das pulverförmige Metall 26 zusammengepreßt wird, einen abgerundeten Abschnitt 28 aufweisen. Das Problem liegt darin, daß der abgerundete Abschnitt 28 sehr dünn ausläuft. Dieser dünne Auslauf würde in relativ kurzer Zeit verschleißen, so daß der Stempel 24 keine befriedigende Form mehr erzeugte. Diese Ausbildung würde daher einen häufigen Austausch des Stempels 24 erfordern, und damit das Herstellungsverfahren verteuern.

Die der Erfindung zugrunde liegende Aufgabe wird darin gesehen, ein Druckübertragungssystem und eine hierfür geeignete Druckscheibe anzugeben, bei der die Druckscheibe lediglich an einer Ecke abgerundet und nicht umkehrbar ist, d. h., die Druckscheibe kann nicht einfach verkehrt herum in eine zugehörige Nut eingesetzt werden. Ferner soll ein Herstellungsverfahren für eine aus gesintertem Metallpulver bestehende Druckscheibe angegeben werden.

Die Aufgabe wird erfindungsgemäß durch die Lehre der Patentansprüche 1, 4 oder 6 gelöst. Weitere vorteilhafte Ausgestaltungen und Weiterbildungen der Erfindung gehen aus den Unteransprüchen hervor.

Erfindungsgemäß findet eine Druckscheibe Verwendung, die eine bogenförmig abgerundete Ecke mit im wesentlichen kreisförmigem Querschnitt aufweist, mit der sich die Druckscheibe an einem entsprechend ausgebildeten Absatz des Teils abstützt, auf das der Druck übertragen werden soll. Ein anderer Bereich der Druckscheibe wird in einer Nut des Teils gehalten, von dem aus der Druck übertragen wird. Dieser andere Bereich der Druckscheibe ist asymmetrisch ausgebildet, und die Nut, in die der asymmetrische Bereich der Druckscheibe hineinpaßt, weist eine entsprechende asymmetrische Fläche auf, so daß die Druckscheibe nicht in umgekehrter Einbaulage in die Nut hineinpaßt. Vorzugsweise ist diese Asymmetrie so beträchtlich, daß sie einem Monteur sofort offenbart wird, wenn er den Versuch unternimmt, die Druckscheibe verkehrt herum einzubauen.

Eine erfindungsgemäße Druckscheibe läßt sich einfach herstellen, indem eine Sinterform mit einer Nut, deren eine Ecke kreisförmig abgerundet ist, sowie ein Stempel, der die Asymmetrie liefert, verwendet werden. Die Asymmetrie läßt sich derart ausbilden, daß der Stempel keine dünnen Bereiche aufweist, die einer erhöhten Abnutzung ausgesetzt sind, so daß die Herstellbarkeit der Druckscheibe kostengünstig und recht einfach ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Fahrzeugendantrieb mit Druckscheibe gemäß dem Stand der Technik,
- Fig. 2: den Ausschnitt des Fahrzeugendantriebs gemäß Fig. 1 mit einer abgeänderten erfindungsgemäßen Druckscheibe,
- Fig. 3: ein Verfahren gemäß dem Stand der Technik zur Herstellung einer Druckscheibe und
- Fig. 4: ein erfindungsgemäßes Verfahren zur Herstellung einer erfindungsgemäßen Druckscheibe.

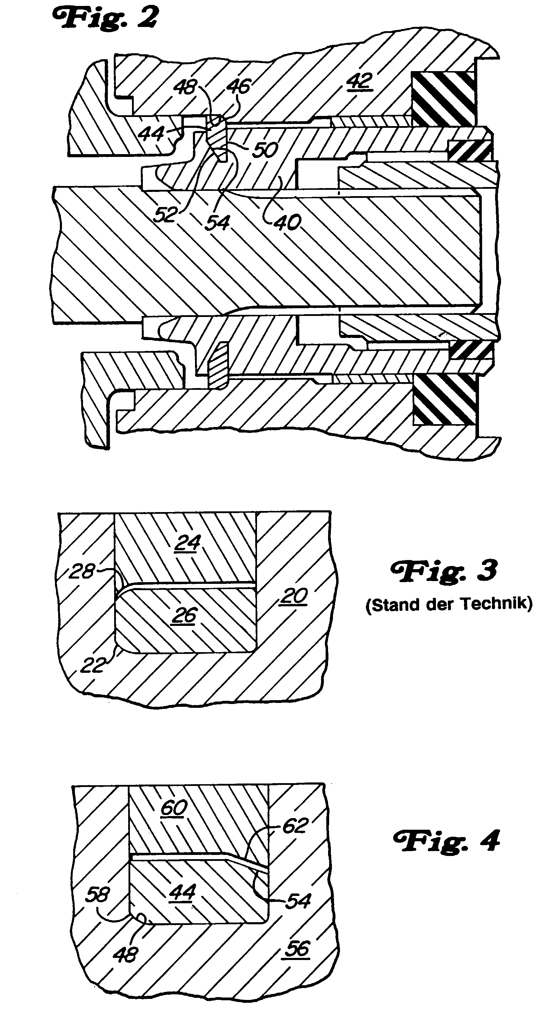

Aus Fig. 2 geht der Ausschnitt eines Fahrzeugendantriebs hervor, bei dem eine erfindungsgemäße Druckscheibe 44 Verwendung findet. Bei dieser Anordnung wird Druck von dem sich drehenden Teil 40 (Welle) auf das nichtdrehende Teil 42 (Achsschenkel) übertragen. Der Druck wird durch die erfindungsgemäße Druckscheibe 44 übertragen.

Die Druckscheibe 44 liegt an einem Absatz 46 des nichtdrehenden Teils 42 an. Um die Spannungen gering zu halten, sind der Absatz 46 und der vorspringende Bereich 48 der Druckscheibe 44 abgerundet, vorzugsweise in einem 90° Bogen.

Die Druckscheibe 44 sitzt in einer Nut 50, die in das sich drehende Teil 40 eingelassen ist. Der Grund der Nut 50 ist asymmetrisch und ausreichend in der Weise ausgebildet, daß die Druckscheibe 44 nicht in umgekehrter Richtung in die Nut 50 hinein paßt und es für jeden, der die Druckscheibe 44 in der Nut 50 montieren will, sofort offenbar wird, wenn die Druckscheibe 44 umgekehrt liegt. In der bevorzugten Ausgestaltung ergibt sich aus weiter unten erläuterten lungsgründen die Asymmetrie durch einen in der Nut 50 vorgesehenen abgewinkelten Abschnitt 52, der mit einem abgewinkelten Abschnitt 54 der Druckscheibe 44 korrespondiert.

Die Druckscheibe 44 wird in üblicher Weise aus gesintertem Metallpulver gefertigt. Wie aus Fig. 4 hervorgeht, wird zum Abformen der Druckscheibe 44 Metallpulver in eine Sinterform 56 eingebracht. Die Sinterform 56 weist eine ringförmig gekrümmte Nut (die in der Zeichnung im Querschnitt gezeigt ist) auf, welche mit einer im Querschnitt bogenförmig ausgebildeten Ecke 58 versehen ist, die mit der gewünschten bogenförmigen Ecke 48 der Druckscheibe 44 korrespondiert. Das Metallpulver wird mittels eines Stempels 60, der einen asymmetrischen, mit dem gewünschten asymmetrischen Bereich der Druckscheibe 44 korrespondierenden Bereich aufweist, zusammengepreßt. Nach der Pressung wird das Metallpulver zu einem festen Körper in Gestalt einer Druckscheibe 44 gesintert.

Bei dem asymmetrischen Bereich 62 des Stempels 60 handelt es sich vorzugsweise um eine einfache abgewinkelte Fläche. Eine derartige Fläche ist nicht den Verschleißproblemen des bogenförmig ausgebildeten Abschnitts 28 des in der Beschreibungseinleitung beschriebenen Stempels 24 ausgesetzt, da der Stempel 24 an keiner Stelle dünn ausgebildet zu sein braucht. Diese Fläche 62 führt zu einem sehr viel dauerhafteren Stempel 60, durch den sich die Herstellungskosten erheblich reduzieren lassen.

Von einem Durchschnittsfachmann lassen sich zahlreiche Abwandlungen der vorliegenden Erfindung vornehmen. Beispielsweise wurde die vorliegende Erfindung anhand einer abgewinkelten Fläche , durch die sich eine Asymmetrie der die Druckscheibe haltenden Nut ergibt, beschrieben. Es kann jedoch jede andere asymmetrische Fläche vorgesehen sein, welche den Einsatz der Druckscheibe lediglich in eine Richtung erlaubt. Ferner wurde die Nut in einem nichtdrehenden Teil und der Absatz in einem drehenden Teil dargestellt. Die Anordnung dieser Bauteile hängt eher von der Richtung des zu übertragenden Drucks ab als davon, welche Teile sich drehen oder nicht drehen. Bei den Bauteilen muß es sich nicht zwingend um rotierende und nicht rotierende Teile handeln, obwohl es unwahrscheinlich ist, daß die beschriebene Anordnung nützlich ist, wenn die Bauteile sich nicht wenigstens relativ zueinander drehen.

## Patentansprüche

1. Druckübertragungssystem mit
a) einem ersten Teil (40), in welches eine asymmetrische Ringnut (50) eingelassen ist,
b) einem zweiten Teil (42), das relativ zum ersten Teil (40) verdrehbar ist und einen zur Ringnut (50) benachbarten Absatz (46) aufweist, dessen Querschnitt einen im wesentlichen bogenförmig abgerundeten Bereich aufweist,
c) und einer in die Ringnut (50) eingesetzten Druckscheibe (44), die sich mit einem vorstehenden Bereich (48) an dem Absatz (46) abstützt, um Druck von dem ersten Teil (40) auf das zweite Teil (42) zu übertragen, wobei der vorstehende Bereich (48) der Druckscheibe (44) eine dem bogenförmigen Bereich des Absatzes (46) korrespondierende Abrundung aufweist, und wobei der von der Ringnut (50) aufgenommene Teil der Druckscheibe (44) einen asymmetrischen Teil aufweist, der mit der Asymmetrie der Ringnut (50) derart korrespondiert, daß die Druckscheibe (44) sich in der Ringnut (50) lediglich in einer Ausrichtung montieren läßt.

2. Druckübertragungssystem nach Anspruch 1, dadurch gekennzeichnet, daß die Asymmetrie der Ringnut (50) durch wenigstens eine abgewinkelte Fläche (52) auf dem Grund der Ringnut (50) gebildet wird.

3. Druckübertragungssystem nach Anspruch 1 oder 2, dadurch gekennzeichnet, daß der bogenförmige Bereich des Absatzes (46) und der vorstehende Bereich (48) der Druckscheibe (44) je einen Bogen von im wesentlichen 90° bilden.

4. Verwendung einer Druckscheibe in einem Druckübertragungssystem nach einem der Ansprüche 1 bis 2, dadurch gekennzeichnet, daß die Druckscheibe (44) ringförmig ausgebildet ist und daß ihr Querschnitt eine bogenförmig ausgebildete Ecke (48) und eine in dem hierzu diametral entgegengesetzten Bereich gegenüber der Rechteckform abgewinkelte Fläche (54) aufweist.

5. Verwendung der Druckscheibe nach Anspruch 4, dadurch gekennzeichnet, daß die bogenförmige Ecke (48) einen Bogen von im wesentlichen 90° bildet.

6. Verfahren zur Herstellung des Druckübertragungssystems nach den Ansprüch en 1 bis 3 mit folgenden Verfahrensschritten zur Herstellung der Druckscheibe (44):
a) Bereitstellung einer Sinterform (56), die eine ringförmig gekrümmte Nut aufweist, wobei die Nut einen im wesentlichen rechteckigen Querschnitt aufweist dessen eine Ecke (58) bogenförmig abgerundet ist,
b) Einbringen von Metallpulver in die Nut,
c) Zusammenpressen des Metallpulvers unter Verwendung eines Stempels (60), dessen Querschnitt mit der Breite der Nut korrespondiert und der einen flachen Anfangsbereich und einen abgewinkelten Endbereich (62) aufweist, und
d) Sinterung des Metallpulvers.

## Claims

1. A thrust transmitting device with
a) a first part (40) in which is formed an asymmetric annular groove (50),
b) a second part (42) which can rotate relative to the first part (40) and which has a shoulder (46) adjacent the annular groove (50) with its cross-section having a region rounded off substantially arcuately,
c) and a thrust washer (44) fitted in the annular groove (50) with in a projecting region (48) bearing on the shoulder (46), in order to transmit the thrust from the first part (40) to the second part (42), wherein the projecting region (48) of the thrust washer (44) has a rounding off corresponding to the arcuate region of the shoulder (46), and wherein the part of the thrust washer (44) received by the annular groove (50) has an asymmetric part which so corresponds to the asymmetry of the annular groove (50) that the thrust washer (44) can be mounted in the annular groove (50) only one way round.

2. A thrust transmitting device according to claim 1, characterized in that the asymmetry of the annular groove (50) is formed by at least one angled surface (52) at the bottom of the annular groove (50).

3. A thrust transmitting device according to claim 1 or 2, characterized in that the arcuate region of the shoulder (46) and the projecting region (48) of the thrust washer (44) each form an arc of substantially 90°.

4. Use of a thrust washer in a thrust transmitting system according to claim 1 or 2, characterized in that the thrust washer (44) is of annular shape and in that its cross-section has an arcuately shaped comer (48) and an angled surface (54) relative to the rectangular shape in a region diametrically opposed to the arcuately shaped corner.

5. Use of the thrust washer according to claim 4, characterized in that the arcuately shaped corner (48) forms an arc of substantially 90°.

6. A method of making the thrust transmitting device according to claims 1 to 3, with the following method steps for making the thrust washer (44):
a) making a sintering die (56) which has an annularly curved groove, wherein the groove has a substantially rectangular cross-section with one corner (58) rounded off arcuately,
b) placing metal powder in the groove,
c) compacting the metal powder using a punch (60) whose cross-section corresponds to the width of the groove and which has a flat initial region and an angled final region (62), and
d) sintering the metal powder.

## Revendications

1. Système de transmission de pression comportant
a) une première partie (40), dans laquelle est aménagée une gorge annulaire dissymétrique (50),
b) une seconde partie (42), qui peut tourner par rapport à la première partie (40) et possède une partie étagée (46) voisine de la gorge annulaire (50) et dont la section transversale possède une partie arrondie essentiellement en forme d'arc de cercle, et
c) un disque de pression (44), qui peut être inséré dans la gorge annulaire (50) et qui prend appui par une partie saillante (48) contre la partie étagée (46) de manière à transmettre la pression de la première partie (40) à la seconde partie (42), la partie saillante (48) du disque de pression (44) possédant un arrondi qui correspond à la partie en forme d'arc de cercle de la partie étagée (46), et la partie logée par la gorge annulaire (50) du disque de pression (44) possédant une partie dissymétrique dont la forme correspond à la dissymétrie de la gorge annulaire (50) de telle sorte que le disque de pression (44) peut être monté dans la gorge annulaire (50) dans une seule orientation.

2. Système de transmission de pression selon la revendication 1, caractérisé en ce que la dissymétrie de la gorge annulaire (50) est formée par au moins une surface coudée (52) formée dans le fond de la gorge annulaire (50).

3. Système de transmission de pression selon la revendication 1 ou 2, caractérisé en ce que la zone en forme d'arc de cercle de la partie étagée (46) et la partie saillante (48) du disque de pression (44) forment chacune un arc de cercle s'étendant essentiellement sur 90°.

4. Utilisation d'un disque de pression dans un système de transmission de pression selon l'une des revendications 1 et 2, caractérisé en ce que le disque de pression (44) est agencé avec une forme annulaire et que sa section transversale possède un coin en forme d'arc de cercle (48) et une surface (54) coudée dans la partie diamétralement opposée à ce coin, par rapport à la forme rectangulaire.

5. Utilisation disque de pression selon la revendication 4, caractérisée en ce que le coin en forme d'arc (36) forme un arc s'étendant essentiellement sur 90°.

6. Procédé pour fabriquer un système de transmission de pression selon les revendications 1 à 3, comprenant les étapes opératoires suivantes pour la fabrication du disque de pression (44) :
a) préparation d'une forme frittée (56), qui possède une gorge cintrée avec une forme annulaire, la gorge possédant une section transversale essentiellement rectangulaire, dont un coin (58) est arrondi en forme d'arc de cercle,
b) introduction d'une poudre métallique dans la gorge,
c) compression de la poudre métallique moyennant l'utilisation d'un poinçon (60), dont la section transversale correspond à la largeur de la gorge et qui possède une partie initiale plane et une partie d'extrémité coudée (62), et
d) frittage de la poudre métallique.
